# EUROPEAN PATENT APPLICATION

(11) **EP 4 502 748 A1**
(43) Date of publication of application: **05.02.2025**
(21) Application number: 23774068.3
(22) Date of filing: 22.03.2023
(51) Int. Cl.: G05D 1/10, B64C 39/02, G08G 5/00

(54) **METHOD FOR CARRYING OUT TASKS ON INFRASTRUCTURE AND SYSTEM OF UNCREWED VEHICLES**

(30) Priority: 25.03.2022 ES 202230270
(71) Applicant: Arborea Intellbird S.L., 37185 Villamayor (Salamanca) (ES)
(72) Inventor: BERNABEU, Carlos, 37185 Villamayor (ES)
(86) International application number: PCT/ES2023/070181
(87) International publication number: WO 2023/180612

(57) **Abstract**

Method for performing tasks in infrastructure, which is implemented with a system of unmanned vehicles, preferably unmanned airplanes, comprising a base vehicle (1) and at least a guest vehicle (1). The base vehicle (1) moves (5) to a first intermediate stationing point (6) located in an infrastructure, the at least one guest vehicle (2) departing therefrom to perform the programmed task and returning to the base vehicle (1), which has the capacity to process the information received from the at least one guest vehicle (2) and to communicate with a control station (3).

## Description

### Technical field

The invention belongs to the field of unmanned vehicles and concerns a method to perform tasks in infrastructures, such as their inspection, which is implemented through a system comprising a base vehicle and at least a guest vehicle, which can operate under control of a control station.

### Background art

Unmanned vehicles (of any type, e.g. ground, aquatic or aerial, the latter being the most common) may be utilized in tasks such as infrastructure inspection, surveillance (e.g. border surveillance, wildfire prevention, harbors) or goods delivery.

This use poses the technical problem that operational autonomy of unmanned vehicles is limited, especially in unmanned aerial vehicles. Thus, in inspection or surveillance tasks, aerial vehicles must perform complex maneuvers, stay in stationary flight mode or acquire data (for instance, photographs or videos), all this being highly energy consuming and therefore considerably decreases flight autonomy. Besides, autonomous or semi-autonomous operations require complex on-board processing to deal with obstacles and elements in respect of which data must be acquired and processed. All this increases the airplanes' mass and energy consumption, further limiting their operational autonomy.

The UAV field has adopted solutions where one vehicle houses another, smaller vehicles, the base vehicle serving as launching platform or providing some sort of logistic support to the guest vehicles.

US2019112049A1 Portable launch system (TOP FLIGHT TECHNOLOGIES, INC.), 18.04.2019, teaches an unmanned aircraft hosting a second airplane. Once the base airplane has reached a certain point, the guest airplane is launched for weather data acquisition purposes.

US 9,305,280 B1 Airborne fulfillment center utilizing unmanned aerial vehicles for item delivery (AMAZON TECHNOLOGIES, INC.), 05.04.2016, describes an airplane operating as parcel warehouse and hosting a delivery drone fleet. The warehouse airplane, which in one embodiment takes the form of an airship, moves to areas where a higher number of delivery orders can be expected and keeps stationary for long periods. In response to an order, a drone takes a parcel and flies down to deliver it. Energy is saved because the drones do not have to fly from a ground station to the delivery point.

In the cited documents, the base airplane leaves its ground station, stays on air for a certain time and after fulfilling its tasks, returns to its ground station, without having stopped at any intermediate points. In the present patent, instead, the base vehicle (1) stations at least one intermediate stationing point (6) along its itinerary, the guest vehicles (2) departing from that point (6) and returning to it (6) once their task has been accomplished. Afterwards the base vehicle (1) can proceed to another intermediate stationing point (9), or else return to its permanent base (4). This mode of operation strengthens the symbiotic relationship between base and guest airplanes (1, 2) and favors their utilization in infrastructure-related tasks, which ordinarily require long times, for instance, the inspection of a linear infrastructure. Thus, during the time in which the at least one guest vehicle (2) carries out its task, the base vehicle (1) is stationed, which will substantially reduce its energy consumption. Accordingly, the base vehicle (1) can be endowed with a high processing capacity, which can be utilized in support of the guest vehicles' (2) task. In turn, the guest vehicles (2) will require less on-board equipment, so they will enjoy greater autonomy. Guest vehicles (2) of a smaller size can be employed, increasing their maneuverability and facilitating tasks involving complex approaches to elements of infrastructure, e.g. high voltage cabling. Besides, guest vehicles (2) will be able to recharge their batteries in the base vehicle, which is provided with means of battery recharging (14, 15, 18) for the guests and for itself.

### Summary of the invention

In a first aspect, the subject matter of the invention is a method to perform tasks on infrastructure, as defined in claim 1. Other embodiments are defined in the dependent claims.

Implementation of the method requires an infrastructure, which will function as intermediate stationing point (6) for the base vehicle (1) or, when applicable, also as point of departure, in addition to being the infrastructure in respect of which the tasks will be performed. By infrastructure must be understood any human construction, for human use (housing, bridges, roads, railway lines), for the production of energy (for instance, wind turbines), its transportation (for instance, oil or gas pipelines, power lines, that is, linear infrastructures) or for surveillance purposes (for instance, networks of towers or other structures for border or wildfire surveillance) or other purposes.

In a preferred embodiment, infrastructure tasks are related with their inspection, for which unmanned vehicles are advantageous in terms of cost and safety over crewed vehicles (for instance, helicopters) or human teams.

By task must be understood any infrastructure-related action performed by means of the vehicles capable of implementing the method. This includes covering an itinerary or route moving towards or from an infrastructure, or alongside the infrastructure to inspect or carry out surveillance tasks, or acquiring data along the way. Processing the acquired data is also considered a task.

The method comprises the steps of: a) Programming a task to be performed by at least a guest vehicle (2) which is hosted in a base vehicle (1), b) the base vehicle (1) moves (5) to a first intermediate stationing point (6) located in an infrastructure, c) the at least one guest vehicle (2) departs from the base vehicle (1) to perform the programmed task, d) the guest vehicle (2) returns to the base vehicle (1) and e) the base vehicle (1) recharges its battery in the first intermediate stationing point (6) or in a further stationing point (9) located in another infrastructure or in a different location in the same infrastructure.

In an embodiment, step a) includes the sub step of programming a task to be performed by the base vehicle (1) itself. This task can be to move, to acquire data or both.

In an embodiment, once the at least one guest vehicle (2) returns to the base vehicle (1), the latter moves (8) to a second intermediate stationing point (9) located in the same infrastructure (for instance, to another tower in the same high power line), or to another infrastructure (for instance, a wind turbine other than the one in which the first intermediate stationing point was located). Intermediate stationing points (6, 9) enable to cover highly extended infrastructures, such as a wind farm or a linear infrastructure, e.g. a high power line.

The method can be implemented under control of a human operator who would be the pilot of the base vehicle (1). For this purpose, the pilot can be located in proximity to the infrastructure, or remotely with respect to the infrastructure.

In an embodiment, the method is performed autonomously, that is, under control of a computing system lodged in a server which is located in a control station (3) and without any human intervention.

In an embodiment, the task of the at least one base vehicle (2) is programmed in said computing system, which transmits the task to the base vehicle (1), which in turn transmits the task to the at least one guest vehicle (2).

In an embodiment, the task of the at least one guest vehicle (2) is programmed in a computing system lodged in the base vehicle (1), which, when it is stationed in the first intermediate stationary point (6), transmits the task to the at least one guest vehicle (2).

In an embodiment, the method comprises the additional task of transmitting to the base vehicle (1) from the at least one guest vehicle (2) the data that the latter has acquired while performing its tasks.

In an embodiment, the method comprises the additional task that the base vehicle (1) processes, while stationed in an intermediate stationing point (6) or in a point of departure (4), the data which the at least one guest vehicle (2) has transmitted to it. As this is performed while the base vehicle (1) is stationed, the resulting energy savings will optimize its data processing capacity.

In an embodiment, the base vehicle (1) transmits to the control station (3) the data resulting from the processing of the data transmitted by the at least one guest vehicle (2).

In an embodiment, the method can comprise that the base vehicle (1) itself performs data acquisition tasks while moving to the first intermediate stationing point (6) or to further stationing points (9).

The method which is the subject matter of this patent entails a job division between the base vehicle (1) and the at least one guest vehicle (2), which reinforces the efficiency of the system when, as proposed here, it is utilized for infrastructure-related tasks: the base vehicle (1) consumes less energy, because it moves only to the intermediate stationing point (6) or, where applicable, to further stationing points (9) and because a high-energy-consuming job such as data processing is carried out in the base vehicle (1) and while it is stationed. The at least one guest vehicle (2) does not process the data that is has acquired, therefore it will require substantially less complex equipment than an equivalent vehicle which were employed for these tasks without the help of a base vehicle (1). This brings energy savings. Besides, a small-sized guest vehicle (2) can be utilized, thus further increasing energy savings and providing more maneuverability, a feature which is particularly advantageous for infrastructure-related tasks.

In a second aspect, the subject matter of the invention is an unmanned vehicles system.

Any type of unmanned vehicle can be used to implement this invention, for instance, UGV (Unmanned Ground Vehicle), ROUV or ROV (Remotely Operated Underwater Vehicle) and UAV (Unmanned Aerial Vehicle, commonly known as drones).

The unmanned vehicles system is configured to perform the steps of the method which is also the subject matter of this patent.

The system comprises a base vehicle (1) and at least a guest vehicle (2). Different types of vehicles can be utilized to configure the system, for instance, the base vehicle (1) can be a UAV hosting one or several UGV (2) and also hosting one or several UAV (2). Preferably, both the base vehicle base (1) and the at least one guest vehicle (2) are UAV.

The base vehicle (1) comprises at least one hosting area (13) for at least one guest vehicle (2). In an embodiment, the base vehicle (1) comprises several hosting areas (13) for respective guest vehicles (2). In an embodiment, the base vehicle (1) has means (16) for holding in place the at least one guest vehicle (2).

The base vehicle (1) comprises recharging means (14, 15) for its battery (17) and means (18) for recharging the battery of the at least one guest vehicle (2).

The base vehicle (1) is configured to move (5) to a first stationing point (6) located in an infrastructure, where it will remain temporarily stationed, for instance, in a tower of a high voltage line, a border surveillance tower or in a wind turbine nacelle.

To reach the first intermediate stationing point (6), the base vehicle (1) may depart from any point, such as a permanent base (4) (which, in the case of UAVs is known as "nest"), from which it would perform a preprogrammed autonomous flight to the first intermediate stationing point (6) and, where applicable, from there to further intermediate stationing points (9). In an embodiment, the permanent base (4) is located in an infrastructure, for instance, in a wind turbine nacelle or in the tower of a high voltage line, whence the base vehicle (1) would move to the first intermediate stationing point (6), which would be located in another wind turbine within the same wind farm (and, where applicable, to another a second intermediate stationing point (9) in another wind turbine, and so no and so forth); or in another tower in the same powerline. Likewise, the base vehicle (1) may depart from a point located in the proximity of the infrastructure, for instance, where it has been transported to that point by an operator who is going to guide the base vehicle (1) to the first intermediate stationing point (6) or to further stationing points (9).

The base vehicle (1) and the at least one guest vehicle (2) are configured to communicate with each other.

In an embodiment, the base vehicle (1) itself may be fitted with on board data-acquisition equipment, so that it can acquire data while moving to the first intermediate stationing point (6) and, where applicable, to further intermediate stationing points (9).

In an embodiment, the system comprises a control station (3) configured to communicate with the base vehicle (1), in whose case the base vehicle (1) will be configured to communicate with the control station (3). The control station (3) comprises a computing system housing a software unit containing an operative system and a program configured to perform the steps of the method in one of its embodiments, namely where the method is performed under control of a computing system.

### Brief description of drawings

FIG. 1: Diagram representing the method for performing tasks in infrastructure, in a preferred embodiment where the infrastructure is a wind turbine and the method is implemented by means of UAVs.
FIG. 2: Base and guests airplanes in an embodiment where the airplanes are multirotor UAVs.
FIG. 3: Vertical cross-section view of a base airplane and a guest airplane. Description of embodiments

In a first aspect, the subject matter of the invention is a method for performing tasks in infrastructure.

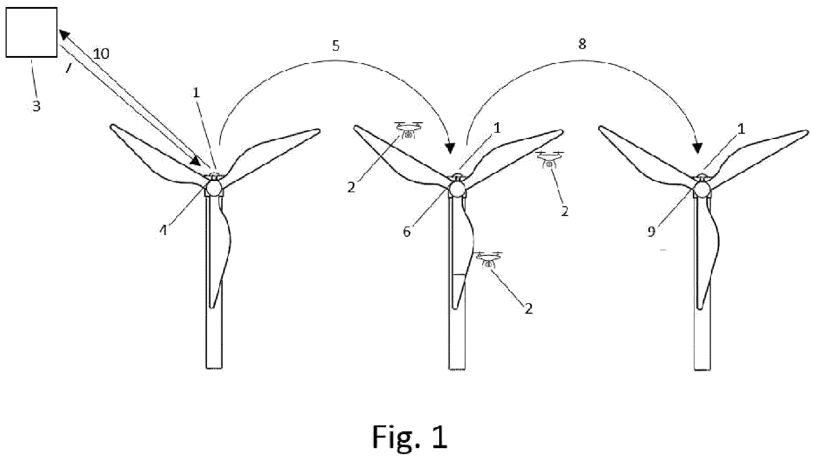

In a preferred embodiment, illustrated in Fig. 1, the tasks are performed by a system comprising an unmanned base vehicle (1) and three unmanned vehicles which are hosted by the base vehicle (1), whereby the latter are called guests vehicles (2). In all embodiments, it is assumed that the method is performed by this plurality of three guest vehicles (2), but this number is just an example, as the method can be likewise implemented with a different number of vehicles, providing there is at least one guest vehicle (2) and a base vehicle (1). In this embodiment, both the base vehicle (1) and guest vehicles (2) are multirotor UAVs.

In an embodiment illustrated in Fig. 1, the infrastructure over which the tasks are performed is a wind farm integrated by an array of wind turbines. The tasks ordinarily performed in this sort of infrastructure are related to inspection, for the purposes of detecting defects in the wind turbines such as cracks in their blades. Therefore, the concept of tasks as defined in this patent comprises movements or routes (5) by the base vehicle (1) to a first intermediate stationing point (6), movements or routes (8) to further stationing points (9), movements or routes of the guests vehicles (2) alongside the infrastructure (in this case, ordinarily alongside the wind turbine blades), data acquisition by the guests vehicles (2) or, where applicable, by the base vehicle (1) and processing said data by the base vehicle (1).

In the preferred embodiment represented in same Fig. 1, the base airplane (1) is permanently stationed in a permanent base (nest) (4) located in the nacelle of one of the wind farm's turbines. For maintenance or other purposes, the UAV (1) can be directed when desired to the wind turbine foot or other point where the operator in charge can take possession of it.

In an embodiment, the method as illustrated in Fig. 1 is implemented under the control of a computing device configured with executable instructions and located in a control station (3), which can be remotely located with respect to the vehicles (1, 2) performing the tasks.

If the wind turbines maintenance program requires inspections tasks to be performed at regular intervals, the first step of the method, according to this proposed embodiment, comprises programming the tasks to be performed by the at least one guest vehicle (2). In an embodiment, these tasks consist in respective routes which each of three guest airplanes (2) must take alongside turbine blades and in data acquisition tasks (taking photos, video or LIDAR) in the course of said routes. Likewise, when the base vehicle (1) is flying in autonomous mode, programming its route constitutes a task, this step being a sub step of the first step of the method.

The tasks are programmed by the operator in charge of the vehicles (1, 2). This programming can be housed in a memory unit located in the computing device of the control station (3), or in a server in the cloud, remotely accessed from the control station (3). The programmed tasks are transmitted (7) (via Wifi or radio) preferably to the base airplane (1). Likewise, programming can be lodged instead in the base airplane's (1) microcontroller, from where the assigned tasks would be transmitted to the guest airplanes (2), preferably via radio. In another embodiment, programming concerning the guest vehicles (2) can be lodged in their respective microcontrollers.

In an embodiment, the routes are defined by a sequence of waypoints, which are a set of coordinates identifying a specific spatial point through its three dimensions (longitude, latitude and altitude). The route of an unmanned airplane can be programmed in different ways known to the expert in the field.

The performance of tasks includes data acquisition, for instance, capturing images by means of photographic or video cameras or LIDAR sensors. Points at which data acquisition tasks must be performed can be associated with the waypoints that define the airplanes (1, 2) routes.

A second step of the claimed method consists in that the base UAV (1), carrying on board the three guest UAVs (2), moves (5) to a first intermediate stationing point (6) located in an infrastructure. In the embodiment depicted in Fig. 1, the point of departure (4) is a nest permanently located in the nacelle of a wind turbine. And the first intermediate stationing point (6) is in the nacelle of another wind turbine in the same wind farm.

The flight towards the first intermediate stationing point (6) can be performed under control of a human pilot which has moved to the proximity of the wind turbine, or it can be an autonomous flight.

A third step is performed when the guest vehicles (2) take off from the base vehicle (1) to perform the programmed tasks. In an embodiment, the take-off order is imparted by the base vehicle's (1) microcontroller. At this very moment the base vehicle's (1) microcontroller will transmit via radio their respective route to each of the guest airplanes (2). Another option is that the guest airplanes (2) have had their tasks programed in their respective microcontrollers, therefore transmission from the base vehicle (1) will not be required.

In a fourth step, the guest vehicles (2) return to the base vehicle (1). The base vehicle (1), following orders from its human pilot, the microcontroller or the control station (3), may then return to the point of departure (4); or else, in another embodiment, may move (8) to a further stationing point (9), that in this embodiment would be located in a different wind turbine, upon which the guest vehicles (2) would perform their respective tasks, programmed pursuant to the first method step.

In a fifth step, the base vehicle base (1) recharges its battery (17). This can be done at the first intermediate stationing point (6), which in this embodiment would be the first wind turbine on which the base vehicle (1) has stationed. Or it can be at a further stationing point (9), which would be a different wind turbine, either the second turbine on which the base vehicle (1) has stationed or a further one. The recharging can be carried out by means installed in the base vehicle (1), such as the solar panels (14, 15) hereinafter described, or combining means in the base vehicle (1) with means in the infrastructure, so that the battery (17) takes the energy from the infrastructure.

It has been mentioned that the guest vehicles' (2) tasks include data acquisition. In an embodiment, the method includes the additional step that guest vehicles (2) transmit data to the base vehicle (1). According to different embodiments, this transmission can be performed in real time, or by uploading data once the guests UAVs (2) have returned to the base UAV (1).

In an embodiment, the base airplane (1) processes data transmitted by guest airplanes (2). When the data are transmitted in real time, as a result of this processing action orders can be issued to some or all the guest vehicles (2), so that they perform certain tasks. For instance, if data processed by base airplane (1) shows what appears to be a crack in a blade, the action order can be acquiring data from a position closer to the blade. Thus, the task initially programmed for a guest vehicle (2) may be modified while it is being carried out.

Likewise, in an embodiment, processing by the base vehicle (1) of the information received from the guest vehicles (2) (regardless that it has been received in real time or by uploading afterwards) will result in sending (10) to the control station (3) an encoded file containing information about damaged elements which may have been found in the infrastructure. Thus, only the relevant data, instead of the full set of data acquired by the guest vehicles (2), would be sent to the control station (3), thus saving a massive volume of data transmission.

In a second aspect, the subject matter of the present invention is an unmanned vehicles system. The system is characterized in that it is configured to perform the steps of the method which is the subject matter of this patent.

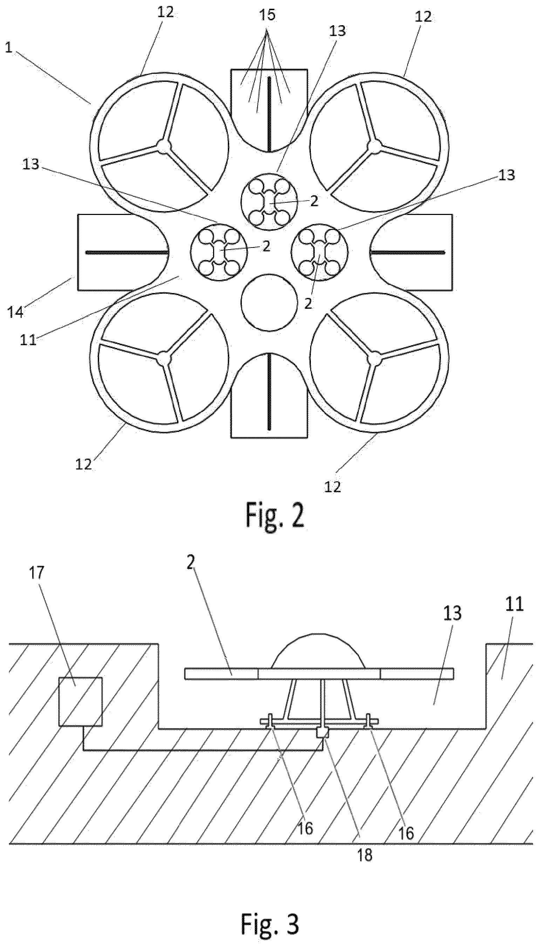

The system comprises a base vehicle (1) and at least a guest vehicle (2). In a preferred embodiment as shown in Fig. 2, the vehicles by means of which the invention is implemented are UAVs, specifically multirotor UAVs, that is, comprising several rotors associated with respective propulsion engines. This configuration enables vertical takeoff and landing and stationary flying, making them more suitable to the performance of the sort of tasks which by way of example are described in this patent.

The base airplane (1) represented in Fig. 2 comprises a platform (11) out of which emerge four circular bodies (12), each one having a propulsion rotor, associated to its respective engine. The platform (11) is operatively coupled to a computing device, comprising a standard microcontroller running the functioning of the engines and associated rotors. The microcontroller also integrates a communications device, which is a radio receptor or a router with a SIM card to enable low latency communications.

The basic mechanical configuration of the base airplane (1) does not depart from what is known in the field. The expert will configure it with navigation and communication devices depending on whether the base airplane (1) will fly in autonomous mode or guided by a human pilot located in the proximity of the UAV or remotely with respect to the UAV. Also, the configuration will depend on whether the system has been designed with a control station (3) for communication with the base UAV (1). More particularly, the base UAV (1) will be equipped with computing processing devices which the expert will consider necessary depending on whether the base UAV (1) will receive data from the guest vehicles (2), and in the affirmative, whether they will be received in real time or by uploading and whether they will be processed on board.

In an embodiment, the microcontroller is connected to different peripheral devices: on the one hand, sensors for space-time location of the base airplane (1) known in the art: gyroscope, accelerometer, barometer, magnetometer, a satellite-positioning system capable of connecting to several satellite networks, such as GPS, GLONASS, BeiDou or GALILEO and a high precision positioning system, for instance a RTK (Real-Time Kinematics)-type system. On the other hand, peripheral devices (like photographic or video cameras, infrared thermal spectrum cameras or LIDAR sensors) to detect obstacles and additionally to detect elements upon which to acquire data relating to the embodiment where the base vehicle (1) itself performs data acquisition tasks complementing the tasks carried out by the at least one guest vehicle (2).

The platform (11) of the base airplane (1) presents three cylindrical concavities (13) which function as hosting areas for respective guest airplanes (2). Concavities (13) are slightly higher than the height of the guest airplanes (2), so that guest airplanes (2) are shielded from the wind while the base airplane (1) is flying. In an embodiment, the base airplane (1) comprises means (16) to hold the guest airplanes (2), as shown in Fig. 3.

Base UAV (1) comprises battery recharging means. In the example of Fig. 2, recharging means consist of a cross-shaped device (14) whose arms emerge from the circular bodies (12). On the upper fase of the device (14) there are photovoltaic cells (15), operatively connected to the battery (17, shown in Fig. 3) of the base vehicle (1). Thus, battery (17) of the base vehicle (1) is recharged through means completely installed on the base vehicle (1).

In addition to the precedent recharging means, and where the base vehicle (1) has a point of departure (4) or a first intermediate stationing point (6) or a further stationing point (9) in a wind turbine nacelle, the base airplane (1) would feed on the electric power available in the wind turbine. In an embodiment, a known wireless charging device would be used. Specifically, a plate would be attached to the lower side of the base airplane (1). A charging plate would be attached to the upper side of the nacelle, so that when the base airplane (1) lands on the nacelle, both plates would be proximal.

The base vehicle (1) is configured to move (5) from its point of departure (4) to a first stationing point (6) located in an infrastructure, for instance, a tower in a high-power line, a border or wildfire control tower or a wind turbine nacelle.

Guest airplanes (2) are also multirotor-type and can be selected from those available in the marketplace. They will be equipped with one or other known navigation, communication and data acquisition devices according to the nature of the assigned tasks. These airplanes present the advantage that, as they can of a small size, they spend less energy and are more agile and capable of reaching the different parts of the infrastructure.

The base vehicle (1) and guest vehicles (2) are configured to communicate with each other. Communications can be via Wifi or through Wireless personal area networks (WPAN) according to Bluetooth^{®} standard or other radio communication systems.

In an embodiment, the system comprises a control station (3) configured to communicate with the base vehicle (1), in whose case this vehicle (1) will in turn be configured to communicate with the control station (3). In an embodiment, this bidirectional communication is effected in real time through a low latency communications protocol, for instance, a 5G protocol.

In the preferred embodiment where the method is implemented under control of a computing system, the control station (3) comprises a computing system housing a software unit containing an operative system and a program configured to execute the method steps.

In an embodiment, the control station (3) comprises the following components: a computing system, comprising at least a circuit integrating multicore processors, a motherboard, RAM memory units, storage means, a graphics card configured to process a large volume of information in the form of images, power supply unit, refrigeration means and a network and low-latency communications card, for instance a system based on router communication provided with a SIM card. An expert in the field, according to foreseeable needs, will be able to configure the control station (2) with equipment of one or another capacity selected among those known in the art.

In an embodiment, the base airplane (1) comprises a processing and real-time computing system enabling it to analyze the image and data transmitted in real time by the guest airplanes (2), by means of artificial intelligence means, for instance, computerized vision, LIDAR and photogrammetric point cloud analysis, in order to implement detect/avoid/act processes which can be transmitted in real time to the guest airplanes (2) and to detect and report autonomously to the control station (3) damaged parts of the infrastructure, saving sending images of the whole infrastructure and thus optimizing the size of the information packages to be sent.

Fig. 3 is a vertical cross-section view of a base airplane (1) and a guest airplane (2). This drawing represents the means present in the base airplane (1) for the purpose of holding the guest airplane (2). At the bottom of each of the hosting concavities (13) in the base airplane (1) there are two clamps (16), which close on the guest airplane's (2) legs. The clamps (16) are operatively connected to respective sensors and servomotors. When the base airplane (1) transmits to the guest airplane (2) the take-off order, the base airplane (1) microcontroller actuates the servomotors, causing the clamps (16) to open. When the guest airplane (2) alights in its hosting area (13), the contact is detected by the sensor, which actuate the servomotors, closing the clamps (16) and holding the guest airplane (2) in its concavity (13). This kind of closing system by means of clamps (16), sensors and servomotors is known in the art.

Fig. 3 provides an example of the guest vehicle's (2) battery recharging means. The battery (17) of the base vehicle (1) is connected to a connection port (18) emerging out of the base of the concavity (13). The guest airplane (2) is provided with a feeding port which will be inserted in the connection port (18) when the guest airplane (2) alights in the corresponding concavity (13).

## Claims

1. Method for performing tasks in infrastructure comprising the following steps:
a. Programming a task to be performed by at least a guest vehicle (2) which is hosted in a base vehicle (1).
b. The base vehicle (1) moving (5) to a first intermediate stationing point (6) located in an infrastructure.
c. The guest vehicle (2) departing from the base vehicle (1) to perform the programmed task.
d. The guest vehicle (2) returning to the base vehicle (1).
e. The base vehicle (1) recharging its battery (17) at the first intermediate stationing point (6) or at a further stationing point (9) located in another infrastructure or in a different point of the same infrastructure.

2. Method for performing tasks in infrastructure according to claim 1, **characterized in that** step a) comprises the sub step of programming a task to be performed by the base vehicle (1), said task consisting in moving somewhere, in acquiring data or both.

3. Method for performing tasks in infrastructure according to claim 1, comprising the additional step of the base vehicle (1) moving (8) from the first stationing point (6) to at least a further stationing point (9).

4. Method for performing tasks in infrastructure according to claim 1, wherein the method is implemented under control of a computing system configured with executable instructions and located in a control station (3).

5. Method for performing tasks in infrastructure according to claim 4, **characterized in that** the task assigned to the at least one guest vehicle (2) is programmed in the computing system, which transmits the task to the base vehicle (1) and **in that** the base vehicle (1) transmits the task to the at least one guest vehicle (2).

6. Method for performing tasks in infrastructure according to claim 1, **characterized in that** the task of the at least one guest vehicle (2) is programmed in a computing system located in the base vehicle (1) and **in that** where the base vehicle (1) stations at the first stationing point (6), the base vehicle (1) transmits the task to the at least one guest vehicle (2).

7. Method for performing tasks in infrastructure according to claim 1, comprising the additional step of transmitting to the base vehicle (1) from the at least one guest vehicle (2) the data acquired by the at least one guest vehicle (2) during the performance of its task.

8. Method for performing tasks in infrastructure according to claim 7, comprising the additional step of the base vehicle (1) processing, while at an intermediate stationing point (6, 9) or at a departing point (4), the data that have been transmitted by the at least one guest vehicle (2).

9. Method for performing tasks in infrastructure according to claim 8, **characterized in that** the base vehicle (1) transmits to the control station (3) the data resulting from the processing of the data which were transmitted to it by the at least one guest vehicle (2).

10. Method for performing tasks in infrastructure according to claim 3, **characterized in that** the base vehicle (1) performs data acquisition tasks while moving (5) to the first stationing point (6) and, where applicable, while moving (8) to a further stationing point (9).

11. Unmanned vehicles system comprising a base vehicle (1) and at least a guest vehicle (2), **characterized in that** the system is configured to implement the steps of the method of claims 1 to 3.

12. Unmanned vehicles system according to claim 11, **characterized in that** it comprises a control station (3) housing a computing system configured with executable instructions to cause the method of claims 1 to 10 to be implemented under control of the control station (3).

13. Unmanned vehicles system according to claim 11, **characterized in that** the base vehicle (1) comprises at least one hosting area for at least one guest vehicle (2) and means (16) to hold the at least one guest vehicle (2).

14. Unmanned vehicles system according to claim 11, **characterized in that** the base vehicle (1) comprises means (14, 15) for recharging its battery (17) and the battery of the at least one guest vehicle (2).

15. Software unit containing an operative system and a computer program comprising instructions causing the control station (3) of claim 12 to perform the method steps of claims 1 to 10.

16. Computer readable medium that has stored the computer program of claim 15.
